# EUROPEAN PATENT APPLICATION

(11) **EP 3 176 860 A1**
(43) Date of publication of application: **07.06.2017**
(21) Application number: 15827330.0
(22) Date of filing: 27.07.2015
(51) Int. Cl.: H01M 4/587, H01M 4/36, H01M 4/38, H01M 4/62

(54) **LITHIUM ION SECONDARY CELL NEGATIVE ELECTRODE MATERIAL AND METHOD FOR MANUFACTURING SAME**

(30) Priority: 28.07.2014 JP 2014153363
(71) Applicant: Showa Denko K.K., Tokyo 105-8518 (JP)
(72) Inventor: KURITA, Takayuki, Tokyo 105-8518 (JP); MATSUO, Akira, Tokyo 105-8518 (JP); ISHII, Nobuaki, Tokyo 105-8518 (JP)
(74) Representative: Strehl Schübel-Hopf & Partner
(86) International application number: PCT/JP2015/071249
(87) International publication number: WO 2016/017583

(57) **Abstract**

A negative electrode material for lithium ion secondary batteries, the negative electrode material comprising particles (A) containing an element capable of occluding/releasing lithium ions other than a carbon element; graphite particles (B) capable of occluding/releasing lithium ions and having a median value of not smaller than 1.4 and not larger than 3.0 in a number-based distribution of aspect ratios of primary particles and carbon fibers (C); wherein a three dimensional web structure is formed from one or more carbon fibers (C), the particles (A) are fusion-bonded to the structure, and the structure is fusion-bonded to at least a part of a surface of the graphite particle (B). A lithium ion secondary battery is obtained using the negative electrode material.

## Description

### TECHNICAL FIELD

The present invention relates to a negative electrode material for lithium ion secondary battery and a manufacturing method thereof. In more detail, the present invention relates to a negative electrode material for lithium ion secondary battery having high energy density and capable of balancing a high initial capacity and a high capacity retention ratio and a manufacturing method thereof.

### BACKGROUND ART

At a speed exceeding a speed of energy saving of electronic components, portable electronic devices are being multi-functionalized, and thus the consumption power of portable electronic devices is increasing. Therefore, a demand for higher capacity and smaller size of a lithium ion secondary battery that is a main power supply of portable electronic devices is stronger than ever. Further, a market for electric vehicles increases and a demand for higher capacity of lithium ion secondary batteries used in the electric vehicles is stronger than ever.

A conventional lithium ion secondary battery uses mainly graphite as a negative electrode material. The graphite can occlude Li only up to a rate of LiC₆ from a view point of stoichiometry. Therefore, a theoretical capacity of the lithium ion battery that uses the graphite in the negative electrode is at most 372 mAh/g.

It is studied to use particles containing a metallic element such as Si or Sn having a higher theoretical capacity to obtain a higher capacity of lithium ion batteries. A theoretical capacity of a lithium ion battery when particles containing, for example, Si are used in a negative electrode material is 3,900 mAh/g. Therefore, when Si or the like can be used in the negative electrode material, it is expected to obtain a lithium ion secondary battery having a smaller size and a higher capacity. However, the negative electrode material such as Si has the large expansion coefficient and contraction coefficient accompanying occlusion (intercalation) and release (deintercalation) of lithium ions. Therefore, gaps are generated between the particles to result in being incapable of obtaining a capacity as expected. Further, due to repetition of large expansion and contraction, the particles are fractured to be fine particles and electrical connections are disrupted, and the internal resistance increases, thus the resulted lithium ion secondary battery has a shorter charge/discharge cycle life.

A negative electrode material obtained by compositing Si particles and a carbon material is suggested. For example, Patent Document 1 discloses a negative electrode material for lithium ion secondary batteries, which comprises a carrier in which carbon fibers having electric conductivity are entangled with each other, and gaps through which a fluid can permeate are formed between the carbon fibers; and silicon-amorphous carbon composite particles that intrude into the gaps, are dispersed inside of the carrier, and are carried by the carrier, wherein the silicon-amorphous carbon composite particles are formed of the silicon particles and the amorphous carbon, and a surface deposit adheres to a surface of the silicon particles.

Patent Document 2 discloses a negative electrode material for lithium ion batteries, which is a negative electrode material composed of a mixture of particles containing an element capable of occluding/releasing lithium, and carbon particles comprising graphite material, wherein the carbon particles have an aspect ratio of not smaller than 1 and not larger than 5 as calculated from an optical microscope image, a 50% particle diameter of 2 to 40 µm in a volume-based cumulative particle size distribution as measured by a laser diffraction particle size distribution measuring device, and a bulk density of not smaller than 1.0 g/cm³ and not larger than 1.35 g/cm³ when 400 times tapping was performed, and wherein the graphite material has a ratio I_{D}/I_{G} (R value) of an intensity (I_{D}) of a peak in the vicinity of 1360 cm⁻¹ to an intensity (I_{G}) of a peak in the vicinity of 1580 cm⁻¹ as measured by Raman spectrometry of not less than 0.01 and not more than 0.2, a thermal expansion coefficient (CTE) between 30°C and 100°C of not less than 4.0 × 10⁻⁶/°C and not more than 5.0 × 10⁻⁶/°C, an interplanar spacing d₀₀₂ obtained from a 002 diffraction line in powder X-ray diffractometry of 0.3340 nm to 0.3380 nm, and is obtained by heat treating petroleum-based cokes and/or coal-based cokes at not lower than 2500 °C.

Patent Document 3 discloses a composite material that contains carbon fibers and composite oxide particles, wherein at least a part of surfaces of the carbon fibers and composite oxide particles is coated with carbon, and the carbon coating is a non-powder coating.

### CITATION LIST

### PATENT LITERATURES

Patent Document 1 : JP 2013-089403 A
Patent Document 2 : JP 2013-222641 A
Patent Document 3 : JP 2011-529257 A

### SUMMARY OF THE INVENTION

### PROBLEM TO BE RESOLVED BY THE INVENTION

The subject of the present invention is to provide a negative electrode material for lithium ion secondary battery having high energy density and capable of balancing a high initial capacity and a high capacity retention ratio and a suitable manufacturing method thereof.

### MEANS FOR SOLVING THE PROBLEMS

Studying variously in order to achieve the object described above has resulted in completing the present invention including the following embodiments.
[1] A negative electrode material for lithium ion secondary battery, the negative electrode material comprising particles (A) comprising an element, which is capable of occludong/releasing lithium ions, other than a carbon element, graphite particles (B) capable of occluding/releasing lithium ions and having a median value of aspect ratios of primary particles in a number-based distribution of not smaller than 1.4 and not larger than 3.0, and carbon fibers (C); wherein a three dimensional web structure is formed of one or more carbon fibers (C), the particles (A) are fusion-bonded to the structure, and the structure is fusion-bonded to at least a part of a surface of the graphite particle (B).
[2] The negative electrode material for lithium ion secondary battery according to the embodiment [1], wherein the particles (A) have a 90% particle diameter of not larger than 200 nm in a volume-based cumulative particle size distribution of primary particles.
[3] The negative electrode material for lithium ion secondary battery according to the embodiment [1] or [2], wherein the graphite particles (B) are artificial graphite obtained by heat treating petroleum cokes and/or coal cokes at not lower than 2500 °C.
[4] The negative electrode material for lithium ion secondary battery according to any one of the embodiments [1] to [3], wherein the carbon fibers (C) contain carbon nanotubes having an average fiber diameter of not smaller than 2 nm and not larger than 40 nm and an aspect ratio of not smaller than 10 and not larger than 15000.
[5] The negative electrode material for lithium ion secondary battery according to any one of the embodiments [1] to [4], wherein an amount of the graphite particles (B) is not less than 86 parts by mass and not more than 89 parts by mass to 10 parts by mass of the particles (A).
[6] The negative electrode material for lithium ion secondary battery according to any one of the embodiments [1] to [5], wherein an amount of the carbon fibers (C) is not smaller than 1 part by mass and not larger than 4 parts by mass to 10 parts by mass of the particles (A).
[7] The negative electrode material for lithium ion secondary battery according to any one of the embodiments [1] to [6], wherein the particles (A) comprise at least one element selected from the group consisting of Si, Sn, Ge, Al and In.
[8] A lithium ion secondary battery comprising the negative electrode material for lithium ion secondary battery according to any one of the embodiments [1] to [7].
[9] A method for manufacturing the negative electrode material for lithium ion secondary battery according to any one of the embodiments [1] to [7], the method comprising :
   subjecting the particles (A) and the carbon fibers (C) to a mechanochemical treatment (1) to obtain a product (1) comprising the particles (A) and the carbon fibers (C), the particles (A) comprising an element capable of occluding/releasing lithium ions other than a carbon element,
   mixing the graphite particles (B) with the product (1) at a mass larger than a mass of the product (1), and subjecting the product (1) and the graphite particles (B) to a mechanochemical treatment (2).

### ADVANTAGEOUS EFFECTS OF THE INVENTION

The negative electrode material for lithium ion secondary battery of the present invention can greatly reduce the electric resistance of an electrode and is excellent in effect of suppressing an electrode structure from destructing due to expansion and contraction of the particles (A). The negative electrode material of the present invention is effective in improving battery characteristics such as the energy density, initial capacity and capacity retention ratio of a lithium ion secondary battery.

The manufacturing method in the present invention can provide the negative electrode material for a lithium ion secondary battery in the present invention inexpensively compared to other methods.

It is assumed that the mechanochemical treatment
(1) among the manufacturing methods in the present invention can loosen aggregation of the particles (A) and aggregation of the carbon fibers (C), and the particles (A) is fusion-bonded to the carbon fibers (C) to expand a contact area. Then, by the mechanochemical treatment (2) among the manufacturing methods in the present invention, a part of the three dimensional web structure composed of at least one carbon fiber (C) is fusion-bonded to the graphite particle (B). In the negative electrode material of the present invention, most of particles (A) and graphite particles (B) are not directly connected with each other but are connected via the three dimensional web structure composed of the carbon fibers (C). Therefore, a volume change of the particles (A) accompanying the intercalation and deintercalation of lithium ions seems to be buffered by the three-dimensional web structure.

### BRIEF DESCRIPTION OF THE DRAWINGS

FIG. 1 is a view that shows a TEM image showing a fusion-bonded state of Si particles and carbon nanotubes.
FIG. 2 is a view that shows a TEM image showing a fusion-bonded state of the Si particles and carbon nanotubes.
FIG. 3 is a view that shows a TEM image showing a fusion-bonded state of the Si particles and carbon nanotubes.
FIG. 4 is a view that shows a TEM image showing a fusion-bonded state of the Si particles and carbon nanotubes.
FIG. 5 is a view that shows a surface SEM image showing a state where structures in which the Si particles are fusion-bonded to the carbon nanotubes are fusion-bonded to a surface of graphite particle in a negative electrode material for a lithium ion secondary battery of the present invention.
FIG. 6 is a view that shows a SEM image of a cross-section of an article obtained by fixing a negative electrode material for a lithium ion secondary battery of the present invention with a resin (an external black part of the graphite particle (B) is a resin).
FIG.7 is a view that shows an enlarged SEM image of a part where structures in which the Si particles are fusion-bonded to the carbon nanotubes are fusion-bonded to the surface of the graphite particle in FIG. 6.
FIG.8 is a view that shows a TEM image showing a fusion-bonded state of the graphite particle and the carbon nanotubes.

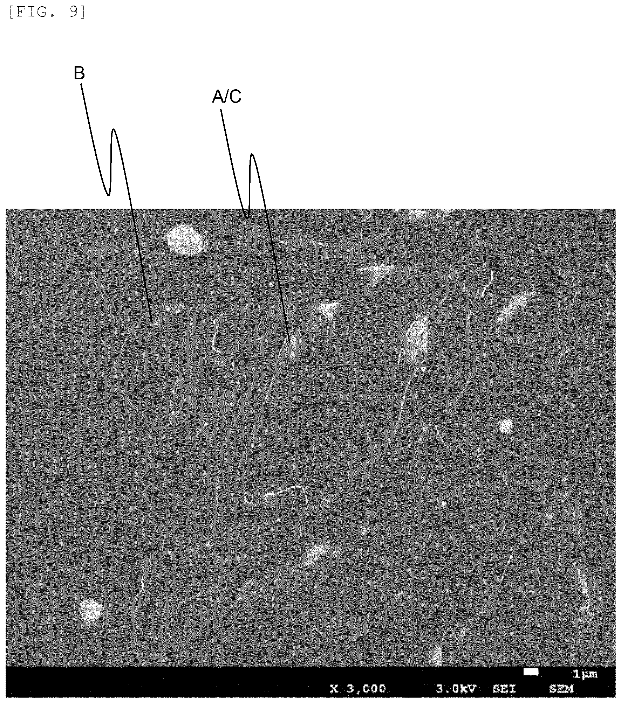

FIG. 9 is a view that shows a SEM image of a cross-section of an article obtained by fixing a negative electrode material for lithium ion secondary battery obtained in Comparative Example 2 with a resin.

### EMBODIMENTS FOR CARRYING OUT THE INVENTION

A negative electrode material for lithium ion secondary battery involved in one embodiment of the present invention comprises particles (A), graphite particles (B), and carbon fibers (C).

### "Particles (A)"

The particles (A) used in the present invention comprise an element capable of occluding and releasing lithium ions other than a carbon element. The particles (A), like SiC and the like, may contain the element capable of occluding and releasing lithium ions other than a carbon element and a carbon element. It is natural that the particles (A) mean particles other than particles composed of only carbon element.

As preferable examples of the element capable of occluding and releasing lithium ions other than carbon element, mentioned can be Sb, Pb, Ag, Mg, Zn, Ga, Bi, Si, Sn, Ge, Al, In or the like. Among these, Si, Sn, Ge, Al or In is preferred, and from the viewpoint of heat resistance, Si is preferred. The particles (A) may comprise a simple substance of the element, or a compound, a mixture, a eutectic or a solid solution which contains at least one of the elements. Further, the particles (A) as a raw material may be an aggregate of a plurality of fine particles, that is, particle formed into a secondary particle. As a shape of the particles (A), a lump shape, a scale-like shape, a spherical shape, a fibrous shape or the like can be mentioned. Among these, the spherical shape or lump shape is preferred.

As particles (A) containing an Si element, substances represented by a general formula: M^{a}ₘSi can be mentioned. The substance is a compound, a mixture, a eutectic or a solid solution, which contains an element M^{a} at a ratio of m mol relative to 1 mol of Si.

The M^{a} is an element excluding Li. Specifically, examples of M^{a} can include Si, B, C, N, O, S, P, Na, Mg, Al, K, Ca, Ti, V, Cr, Mn, Fe, Co, Ni, Cu, Zn, Mo, Ru, Rh, Pd, Pt, Be, Nb, Nd, Ce, W, Ta, Ag, Au, Cd, Ga, In, Sb, Ba and the like. Note that in the case where M^{a} is Si, the substance means Si simple substance. In the formula, m is preferably not less than 0.01, more preferably not less than 0.1, and even more preferably not less than 0.3.

Specific examples of the particles (A) containing an Si element can include an Si elemental substance, alloys of Si and an alkaline earth metal; alloys of Si and a transition metal; alloys of Si and a metalloid; solid solution alloys or eutectic alloys of Si and Be, Ag, Al, Au, Cd, Ga, In, Sb or Zn; silicides such as CaSi, CaSi₂, Mg₂Si, BaSi₂, Cu₅Si, FeSi, FeSi₂, CoSi₂, Ni₂Si, NiSi₂, MnSi, MnSi₂, MoSi₂, CrSi₂, Cr₃Si, TiSi₂, Ti₅Si₃, NbSi₂, NdSi₂, CeSi₂, WSi₂, W₅Si₃, TaSi₂, Ta₅Si₃, PtSi, V₃Si, VSi₂, PdSi, RuSi, RhSi or the like; and SiO₂, SiC, Si₃N₄ and the like.

As particles (A) containing an Sn element, a tin elemental substance, tin alloys, tin oxides, tin sulfides, tin halides, stannides and the like can be mentioned. Specific examples of the particles (A) containing an Sn element can include alloys of Sn and Zn, alloys of Sn and Cd, alloys of Sn and In, alloys of Sn and Pb; tin oxides such as SnO, SnO₂, M^{b}₄SnO₄ (M^{b} represents a metal element other than Sn) and the like; tin sulfides such as SnS, SnS₂, M^{b}₂SnS₃ (M^{b} represents a metal element other than Sn) and the like; tin halides such as SnX₂, SnX₄, M^{b}SnX₄ (M^{b} represents a metal element other than Sn. X represents a halogen atom) or the like; and stannides such as MgSn, Mg₂Sn, FeSn, FeSn₂, MoSn, MoSn₂ and the like.

The particles (A) are preferably oxidized at a surface thereof. This oxidation may be due to natural oxidation or artificial oxidation. The particles (A) are covered with a thin oxide film by this oxidation.

The particles (A) have a lower limit of a 50% particle diameter in the number-based cumulative particle size distribution of primary particles preferably at 5 nm, more preferably at 10 nm, further more preferably at 30 nm, and an upper limit of the 50% particle diameter in the number-based cumulative particle size distribution of primary particles preferably at 1000 nm, more preferably at 500 nm, and further preferably at 100 nm.

Further, the particles (A) have a 90% particle diameter in the volume-based cumulative particle size distribution of primary particles preferably at not larger than 200 nm.

The particles (A) in a raw material state are usually a mixture of primary particles and aggregates (that is, secondary particles) of the primary particles. The particles (A) in a raw material state may have a peak each in the range of 0.1 µm to 1 µm and in the range of 10 µm to 100 µm in the number-based particle size distribution as measured without discriminating primary particles and secondary particles. Further, a 50% particle diameter (Dₙ₅₀) in the number-based cumulative particle size distribution as measured without discriminating the primary particles and secondary particles of the particles (A) in a raw material state is preferably 1/200 to 1/10, and more preferably 1/100 to 1/20 relative to a 50% particle diameter (Dᵥ₅₀) in the volume-based cumulative particle size distribution as measured without discriminating the primary particles and secondary particles of the graphite particles (B) in a raw material state.

In the negative electrode material of the present invention, the particles (A) include particles distributed in a state of primary particles and particles distributed in a state of secondary particles (that is, aggregated particles). A 50% particle diameter in the number-based cumulative particle size distribution as measured by collecting only particles (A) distributed in a state of secondary particles in the negative electrode material is preferably not smaller than 10 nm and not larger than 1000 nm.

Further, in the particles (A) in the negative electrode material preferably, there are not less than 95% by number of total particles (A) in the range of particle diameter of not less than 10 nm and not larger than 400 nm in the number-based particle size distribution as measured without discriminating the primary particles and secondary particles.

### "Graphite Particles (B)"

The graphite particles (B) used in the present invention are particles composed of a graphitic carbon material capable of occluding and releasing lithium ions. Examples of the graphitic carbon material can include an artificial graphite, a pyrolytic graphite, an expanded graphite, a natural graphite, a scale-like graphite, a flake-like graphite and the like.

The graphite particles (B) have a 50% particle diameter (Dᵥ₅₀) in the volume-based cumulative particle size distribution of preferably not smaller than 2 µm and not larger than 40 µm, more preferably not smaller than 2 µm and not larger than 30 µm, and still more preferably not smaller than 3 µm and not larger than 20 µm. When the 50% particle diameter is excessively small, it tends to be difficult to increase an electrode density. By contrast, when the 50% particle diameter is excessively large, the output characteristics tend to degrade because a diffusion distance of lithium ions in the solid becomes longer. Thus, in the graphite particles (B), there are preferably not less than 90% by number of all graphite particles (B) in the range of a particle diameter of not smaller than 1 µm and not larger than 50 µm and more preferably not less than 90% by number of all graphite particles (B) in the range of a particle diameter of not smaller than 5 µm and not larger than 50 µm in the number-based cumulative particle size distribution.

Further, the graphite particles (B) have a 10% particle diameter (Dᵥ₁₀) of preferably not less than 1 µm, and more preferably not less than 2 µm in the volume-based cumulative particle size distribution. Note that the particle size distribution of the graphite particles (B) is measured by a laser diffraction particle size distribution analyzer. The particle size distribution is obtained without discriminating the primary particles and secondary particles.

The graphite particles (B) used in the present invention have a d₀₀₂ of preferably not larger than 0.337 nm and more preferably not larger than 0.336 nm. Further, the graphite particles (B) have an Lc of preferably not smaller than 50 nm and more preferably not smaller than 50 nm and not larger than 100 nm. The d₀₀₂ is the interplanar spacing determined from a 002 diffraction line in powder X-ray diffraction, and the L_{c} is a size of crystallite in the c axis direction determined from a 002 diffraction line in the powder X-ray diffraction.

The graphite particles (B) used in the present invention have the BET specific surface area of preferably not smaller than 1 m²/g and not larger than 10 m²/g, and more preferably not smaller than 1 m²/g and not larger than 7 m²/g.

The graphite particles (B) used in the present invention have a median value (50% aspect ratio) of aspect ratios (major diameter/minor diameter) of primary particles in the number-based cumulative distribution of preferably of not smaller than 1.4 and not larger than 3.0. The graphite particles (B) having the aspect ratio distribution like this tend to have many flat portions and recess portions on a surface thereof.

A three-dimensional web structure composed of the carbon fibers (C) tends to fusion-bond to a flat portion or a recess portion of the graphite particles (B). It is preferable that a three-dimensional web structure described below surrounds a circumference of the graphite particle (B).

The graphite particles (B) used in the present invention can use coal-derived coke and/or petroleum-derived coke as a raw material. The graphite particles (B) used in the present invention are preferably formed by heat treating the coal-derived coke and/or petroleum-derived coke at a temperature of preferably not lower than 2000 °C, and more preferably not lower than 2500 °C. The upper limit of the heat treatment temperature is, not particularly limited, preferably 3200 °C. The heat treatment is preferably performed under an inert atmosphere. In the heat treatment, a conventional Acheson graphitization furnace or the like can be used.

An amount of the graphite (B) contained in the negative electrode material has the lower limit of preferably 400 parts by mass, and the upper limit of preferably 810 parts by mass, and more preferably 600 parts by mass relative to 100 parts by mass of the total mass of the particles (A) and the carbon fibers (C). Further, the amount of the graphite particles (B) is preferably not less than 86 parts by mass and not more than 89 parts by mass relative to 10 parts by mass of the particles (A).

### "Carbon Fibers (C)"

The carbon fibers (C) used in the present invention are a carbon material having a fibrous shape. As the carbon fibers (C), for example, a pitch-based carbon fiber, a PAN-based carbon fiber, a carbon fiber, a carbon nanofiber, a carbon nanotube and the like can be employed. From the viewpoint of reducing an addition amount, the carbon nanotube is preferably used.

In the carbon fibers (C) used in the present invention, there are not less than 95% by number of all fibers in a fiber diameter of preferably not smaller than 2 nm and not larger than 40 nm, more preferably not smaller than 5 nm and not larger than 40 nm, still more preferably not smaller than 7 nm and not larger than 20 nm, and still further preferably not smaller than 9 nm and not larger than 15 nm. The carbon fibers (C) having the fiber diameter smaller than 2 nm tend to be difficult to be loosened into individual fibers to disperse. Further, the carbon fibers (C) having the fiber diameter larger than 40 nm tends to be difficult to be produced by a supported catalyst method.

Examples of the carbon fibers (C) used in the present invention can include carbon nanotubes having a tubular structure in which a graphene sheet composed of a six membered carbon ring is rolled in parallel to the fiber axis, carbon nanotubes having a platelet structure in which a graphene sheet composed of a six membered carbon ring is perpendicularly arranged to the fiber axis, and carbon nanotubes having a herringbone structure in which a graphene sheet formed of a six membered carbon ring is rolled with an oblique angle to the fiber axis. Among these, the carbon nanotubes having the tubular structure are preferred from the viewpoint of electric conductivity and mechanical strength.

The carbon fiber (C), itself, may be straight without twist, or may twist and turn. The carbon fiber that twists and turns has an excellent contact efficiency with the particles (A) in the negative electrode material at the same addition amount, resulting in uniform complexation with the particles (A) even at a slight addition of the carbon fibers (C). Further, since the carbon fiber (C) that twists and turns has high following property to a shape change, it is considered that the contact with the particles (A) can be maintained even during expansion of the particles (A) and a network between the fibers is difficult to be broken.

The aspect ratio of the carbon fibers (C) is preferably not smaller than 10 and not larger than 15, 000, and more preferably not smaller than 200 and not larger than 15,000. As the aspect ratio becomes smaller, an entanglement degree between the fibers becomes weaker to result in the tendency of becoming difficult to form an efficient conductive network. As the aspect ratio becomes larger, the entanglement degree between the fibers becomes stronger to result in the tendency of becoming difficult to disperse. Here, the aspect ratio is a ratio of an average fiber length to an average fiber diameter.

The BET specific surface area of the carbon fibers (C) is preferably not smaller than 150 m²/g and not larger than 300 m²/g, more preferably not smaller than 240 m²/g and not larger than 280 m²/g, and further preferably not smaller than 250 m²/g and not larger than 270 m²/g. The tap density of the carbon fibers (C) is, not particularly limited, preferably 0.001 to 0.1 g/cm³ and preferably 0.005 to 0.08 g/cm³.

Further, the lattice constant C₀ value of the carbon fibers (C) is preferably not smaller than 0.680 nm and not larger than 0.690 nm. When the C₀ value is excessively small, the flexibility of the carbon fibers (C) decreases to result in the tendency of becoming difficult to loosen the aggregate.

An oxidation onset temperature of the carbon fibers (C) is preferably not lower than 400 °C and not higher than 550 °C. Here, the oxidation onset temperature is a temperature when a weight of 0.1 % decreases relative to an initial weight (charge amount) upon raising the temperature from room temperature to 1000 °C at 10 °C/min under air flow on a thermal balance. When the oxidation onset temperature is excessively low, a crystal defect in the carbon fibers tends to increase.

The carbon fibers (C) have the compressed specific resistance at the compression density of 0.8 g/cm³ of preferably not smaller than 0.014 Qcm and not larger than 0.020 Qcm. When the compressed specific resistance at the compression density of 0.8 g/cm³ is excessively small, the carbon fibers (C) tend to have low flexibility. Further, when the compressed specific resistance is excessively large, the carbon fibers (C) tend to have a low electric conductivity-imparting effect.

The carbon fibers (C) used in the present invention are, though not particularly limited by its manufacturing method, preferably manufactured by a vapor phase method. The carbon fibers (C) synthesized by a supported catalyst method among the vapor phase methods are preferred.

The supported catalyst method is a method by which the carbon fibers are manufactured by reacting a carbon source in the gas phase using a catalyst formed by supporting a catalyst metal on an inorganic carrier.

Examples of the inorganic carriers can include alumina, magnesia, silicatitania, calcium carbonate and the like. The inorganic carrier is preferably in a granular form. Examples of the catalyst metals can include iron, cobalt, nickel, molybdenum, vanadium and the like. Supporting can be performed by impregnating a carrier with a solution of a compound containing a catalyst metal element, by co-precipitating a solution of a compound containing an element constituting the inorganic carrier and a compound containing a catalyst metal element, or by other known supporting methods.

Examples of the carbon sources can include methane, ethylene, acetylene and the like. The reaction can be performed in a reactor such as a fluid bed reactor, a moving bed reactor, a fixed bed reactor or the like. A temperature during the reaction is preferably set at 500 °C to 800 °C. A carrier gas can be used in order to feed the carbon source to the reactor. Examples of the carrier gases can include hydrogen, nitrogen, argon and the like. A reaction time is preferably for 5 to 120 minutes.

An amount of the carbon fibers (C) contained in the negative electrode material of the present invention is not smaller than 1 part by mass and not larger than 4 parts by mass relative to 10 parts by mass of the particles (A). Further, the amount of the carbon fibers (C) contained in the negative electrode material of the present invention is preferably not smaller than 0.1 part by mass and not larger than 10 parts by mass, and more preferably not smaller than 0.5 part by mass and not larger than 5 parts by mass relative to 100 parts by mass of the total of the particles (A) and the graphite particles (B).

The negative electrode material of the present invention has a three-dimensional web structure formed by one or more carbon fibers (C). The three-dimensional web structure is composed of the carbon fibers (C) three-dimensionally interlaced with each other at a low density like a floc.

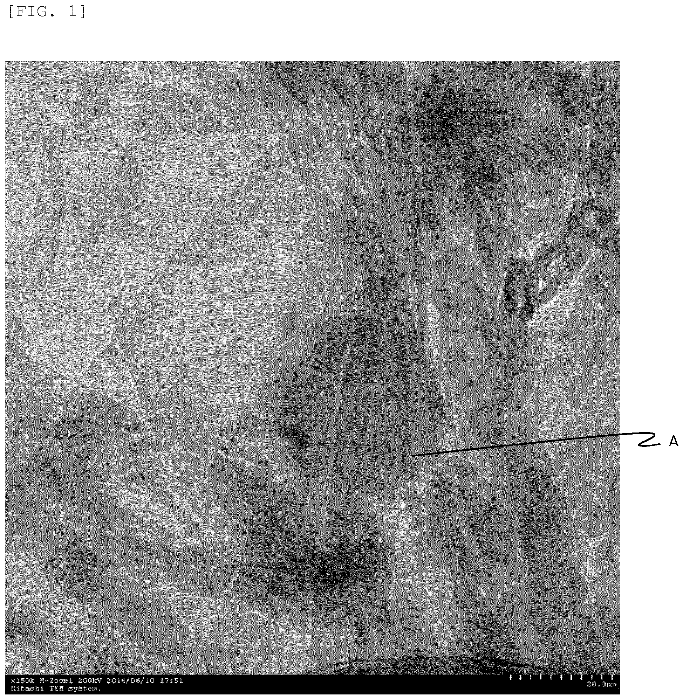

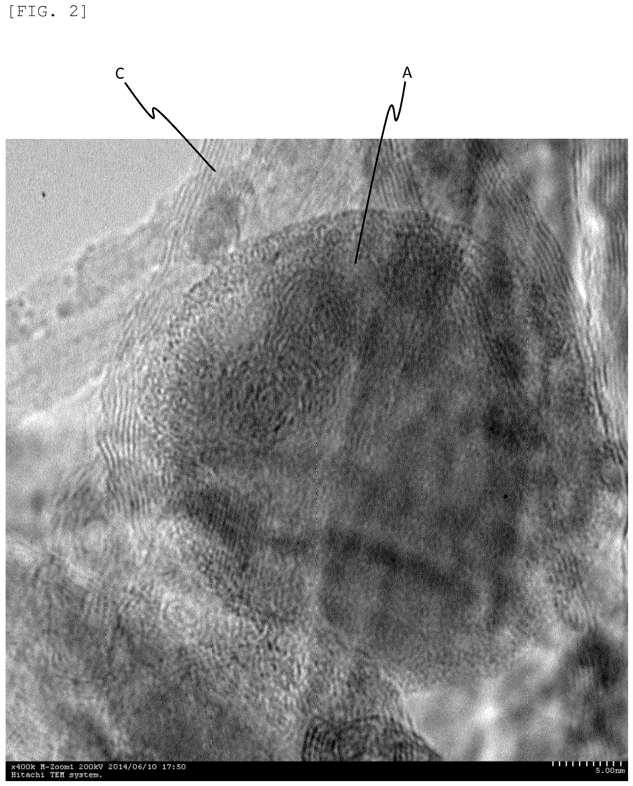

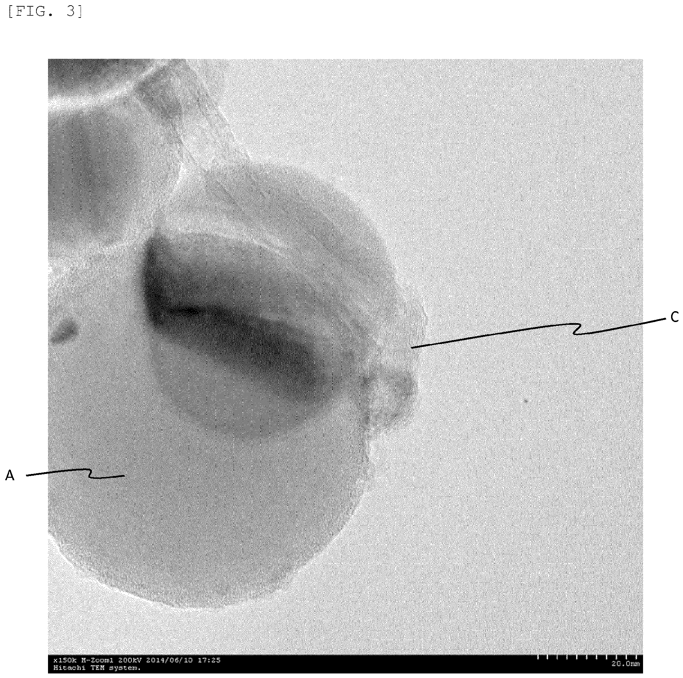

Further, the negative electrode material of the present invention has preferably the particles (A) enclosed by the three-dimensional web structure. In the three-dimensional web structure, there is a basket-like space surrounded by one or more carbon fibers (C) constituting the web structure. The particles (A) are mainly enclosed by the space. Further, the particles (A) are fusion-bonded to a surface of the carbon fibers (C) that constitute the three-dimensional web structure. It is considered that conductive paths are formed between the carbon fibers (C) and the particles (A) due to this fusion-bonding. FIG.1 to FIG.4 each is a TEM photograph that shows one example of a fusion-bonded state between the particles (A) and the carbon fibers (C). The particles (A) enclosed by the
three-dimensional web structure are, being enclosed by the carbon fibers (C), difficult to come into contact with an object outside the structure. The carbon fibers (C) that constitute the structure can come into contact with an object outside of the structure, for example, the graphite particles (B).

Further, in the negative electrode material of the present invention, the three-dimensional web structure preferably surrounds a periphery of the graphite particles (B). In addition, the three-dimensional web structure is fusion-bonded to at least a part of a surface of the graphite particles (B). Due to this fusion-bonding, the conductive paths are considered to be formed between the three-dimensional web structure (mainly carbon fibers (C)) and the graphite particles (B).

In the negative electrode material according to an embodiment of the present invention, the particles (A) are fusion-bonded to the carbon fibers (C), and the carbon fibers (C) are fusion-bonded to the graphite particles (B). Most particles (A) do not come into direct contact with the graphite particles (B) but are connected with the graphite particles (B) via the carbon fibers (C). In a negative electrode material that has a form where the particles (A) do not come into direct contact with the graphite particles (B) but are connected with the graphite particles (B) via the carbon fibers (C), even when the particles (A) largely change in volume accompanying intercalation or deintercalation of lithium ions, the flexibly changeable carbon fibers (C) can maintain the conductive paths between the particles (A) and the graphite particles (B). Consequently, when the negative electrode material of the present invention is contained in an electrode layer, a lithium ion secondary battery that has a high energy density and can balance a high initial capacity and a high capacity retention ratio can be obtained.

A manufacturing method of the negative electrode material involved in the present invention is, though not particularly limited, preferable to use a mechanochemical process.

A preferable method for manufacturing the negative electrode material involved in the present invention comprises subjecting the carbon fibers (C) and the particles (A) to a mechanochemical treatment (1) to obtain a treated article (1) comprising the particles (A) and the carbon fibers (C), mixing the treated article (1) with the graphite particles (B), and then subjecting the treated article (1) and the graphite particles (B) to a mechanochemical treatment (2).

The mechanochemical treatment is a method by which the mechanical energy such as collision energy, compression energy, shearing energy or the like is imparted to a solid target substance to induce a chemical change in the solid target substance. In the present invention, the mechanochemical treatment is preferably performed by a dry process.

In the mechanochemical treatment, when large mechanical energy is imparted to a powder containing particles having different sizes and shapes, a particle surface is made amorphous and activated. A surface-activated particle interacts with a particle in the surroundings. When the mechanical energy imparted to the powder by the mechanochemical treatment becomes higher, not only particles of different kinds simply adhere with each other but also the particles are bound with each other, and its bound portion becomes a solidified state like a sintered body. This phenomenon is referred to as mechanofusion. In the present invention, a state in which the particles (the particles (A) and graphite particles (B)) and the structures of the carbon fibers (C) are fusion-bonded to each other means a state where an amorphous bound portion connecting the particles and the structures is formed between the both.

As a specific method of the mechanochemical treatment, mentioned is a method comprising moving raw material powder on the gas to collide the raw material powders with each other or with a rigid wall, a method comprising passing the raw material powders through a narrow space with large force, or the like, so as to impart a compression force and shearing force to the powder. As the mechanochemical treatment, preferred is a method comprising dispersing the raw material powder in a gas phase and uniformly imparting an impact force, a compression force and a shearing force to individual particles by rotating a blade with a special shape at a high speed in a horizontal cylindrical vessel. By this mechanochemical treatment, uniform complexation of particles can be proceeded within 1 to 5 minutes.

As a device capable of performing the mechanochemical treatment, a hybridization system manufactured by Nara Machinery Co., Ltd., NOBILTA manufactured by HOSOKAWA MICRON CORPORATION, and so on can be mentioned. Among these, the NOBILTA can be preferably used in the present invention.

When the powder is treated in the mechanochemical treatment, an output of the device is set to preferably not smaller than 4.3 W/cm³, more preferably not smaller than 5.7 W/cm³, and still more preferably not smaller than 8.6 W/cm³ per unit volume of the powder.

Upon applying the mechanochemical treatment (1) to the particles (A) and the carbon fibers (C), when the temperature of the atmosphere is set excessively high, a reaction between the particles (A) and the carbon fibers (C) is excessively accelerated and a lot of carbonized coproduct or the like may be generated. Here, an atmospheric temperature during the mechanochemical treatment (1) to the particles (A) and carbon fibers (C) is maintained preferably at not higher than 500 °C, more preferably at not higher than 400 °C, and further preferably at not higher than 300 °C.

In addition, the mechanochemical treatment can be performed in air but is preferably performed in an inert gas atmosphere. As the inert gas, a nitrogen gas is preferable and an argon gas is more preferable.

The treated article (1) can be obtained by the mechanochemical treatment (1) to the particles (A) and carbon fibers (C). When the mechanochemical treatment (1) is applied, the carbon fibers (C) can form into the three-dimensional web structure and the particles (A) can be fusion-bonded on a surface of the carbon fibers (C). The fusion-bonding occurred by the mechanochemical treatment (1) can fix the particles (A) uniformly and solidly on the carbon fibers (C). By the fusion-bonding, an electric contact is secured between the particles (A) and the carbon fibers (C). The tap density of the treated article (1) is, though not particularly limited, preferably 0.002 to 0.1 g/cm³, and more preferably 0.006 to 0.09 g/cm³.

Next, the treated article (1) is mixed with the graphite particles (B). The graphite particles (B) are mixed with the treated article (1) preferably at a mass larger than a mass of the treated article (1). Since the product (1) and the graphite particles (B) can be uniformly mixed by the mechanochemical treatment (2), the graphite particles (B) may only be added to the treated article (1), or the treated article (1) may only be added to the graphite particles (B) in the mixing step.

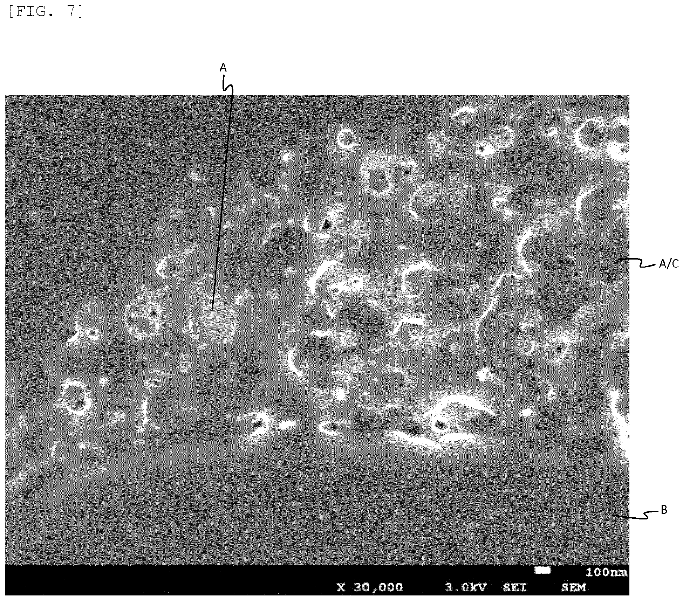

When the mechanochemical treatment is applied to the treated article (1) and the graphite particles (B), the three-dimensional web structure can be fusion-bonded to at least a part of a surface of the graphite particle (B). By the fusion-bonding of the three-dimensional web structure, at least a part of the surface of the graphite particle (B) is covered with the three-dimensional web structures (see FIG. 7). By this covering, the electrical contact is secured between the graphite particles (B) and the carbon fibers (C). Thus, the conductive paths reaching the particles (A) from the graphite particles (B) via the carbon fibers (C) are formed.

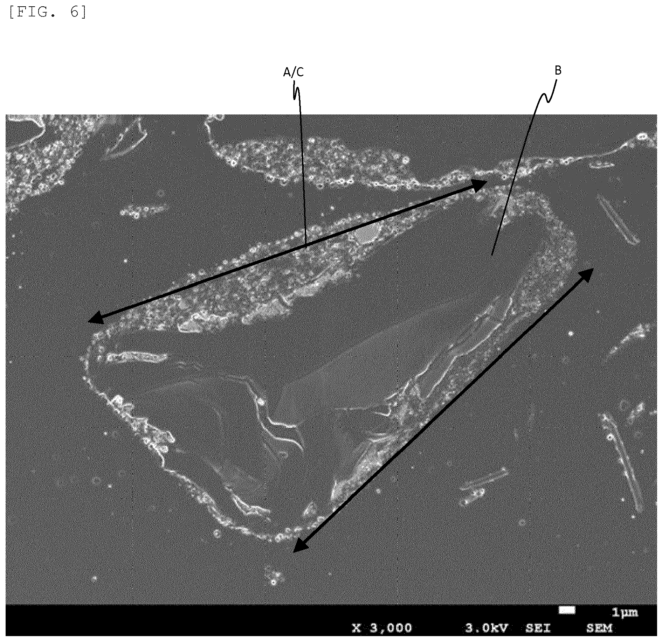

It is preferable that the three-dimensional web structure, relative to the graphite particles, has a coverage factor of preferably not less than 50 %, the coverage factor being a ratio of a length of an outer periphery of the graphite particle (B) that is in contact with the web structures to a total length of the outer periphery of a cross-section of the graphite particle (B) in a cross-sectional SEM photograph. FIG. 6 shows an example where not less than 50% of the outer periphery of the cross-section of the graphite particle (B) is covered with the three-dimensional web structures composed of the carbon fibers (C) (an arrow mark in FIG. 6 shows a covered portion).

An aspect ratio of the negative electrode material formed by covering the graphite particles (B) with the three-dimensional web structures becomes slightly smaller than an aspect ratio of the original graphite particles (B) and approaches 1.

As an example of a case where the negative electrode material of the present invention contains carbon nanofibers (D), mentioned can be a case where the carbon nanofibers (D) bridge and are fusion-bonded to a plurality of graphite particles (B), and the three-dimensional web structures composed of the carbon fibers (C) are fusion-bonded to the graphite particle (B). The carbon fibers (C) may also be fusion-bonded to the carbon nanofibers (D). The mechanochemical treatment for manufacturing the negative electrode material containing the carbon nanofibers (D) is performed as described below. First, the mechanochemical treatment (1) is applied to the particles (A) and the carbon fibers (C) to obtain a treated article (1) comprising the particles (A) and the carbon fibers (C). Further, the mechanochemical treatment (3) is applied to the graphite particles (B) and the carbon nanofibers (D) to obtain a treated article (2) comprising the graphite particles (B) and the carbon nanofibers (D). Next, the treated article (1) and the treated article (2) are mixed, and the mechanochemical treatment (4) is applied to the obtained mixture.

The negative electrode material of the present invention may further contain conductive carbon particles. The conductive carbon particles used in the present invention have a 50% particle diameter in the number-based cumulative particle size distribution of primary particles of preferably not smaller than 20 nm and not larger than 100 nm, and more preferably not smaller than 30 nm and not larger than 50 nm. As the conductive carbon particles, mentioned can be carbon black-based conductive particles such as acetylene black, furnace black, Ketjen black or the like. When the conductive carbon particles are added, an initial capacity of the lithium ion battery tends to be increased.

An amount of the conductive carbon particles is preferably not less than 0.1 part by mass and not more than 10 parts by mass to 100 parts by mass of a total amount of the particles (A) and the graphite particles (B).

The negative electrode material involved in one embodiment of the present invention can be contained in an electrode sheet. The electrode sheet has usually a current collector, and an electrode layer coated on the current collector. The negative electrode material involved in one embodiment of the present invention is usually contained in the electrode layer.

As the current collector, for example, a nickel foil, a copper foil, a nickel mesh, a copper mesh or the like can be mentioned. Further, the current collector may comprise a conductive metal foil and a conductive layer coated thereon. As the conductive layer, mentioned can be a layer composed of a conductivity-imparting agent such as conductive carbon particles or the like and a binder. The electrode layer can comprise the binder in addition to the negative electrode material involved in one embodiment of the present invention.

Examples of the binders used in the electrode layer or the conductive layer can include polyethylene, polypropylene, ethylene-propylene terpolymer, butadiene rubber, styrene butadiene rubber, butyl rubber, acrylic rubber, high molecular weight compounds with large ionic conductivity and the like. Examples of the high molecular weight compounds with large ionic conductivity can include polyvinylidene fluoride, polyethylene oxide, polyepichlorohydrin, polyphosphazene, polyacrylonitrile and the like. An amount of the binder is preferably 0.5 to 100 parts by mass relative to 100 parts by mass of the negative electrode material.

The conductivity-imparting agent used in the conductive layer is not particularly limited as long as it plays a role of imparting the electric conductivity between the electrode layer and the current collector. For example, vapor grown carbon fiber (for example, "VGCF" manufactured by SHOWA DENKO K.K.), conductive carbon (for example, "DENKA BLACK" manufactured by Denki Kagaku Kogyo Kabushiki Kaisha, "Super C65" manufactured by TIMCAL, "Super C45" manufactured by TIMCAL, or "KS6L" manufactured by TIMCAL) or the like can be mentioned.

The electrode layer can be obtained, for example, by coating and drying a paste containing the binder and the negative electrode material on the current collector. The paste can be obtained by, for example, kneading the negative electrode material, the binder, and, as required, a solvent. The paste can be formed into a shape such as a sheet shape, a pellet shape or the like.

There is no particular limitation on the solvent, and as the solvent, mentioned can be N-methyl-2-pyrrolidone, dimethylformamide, isopropanol, water or the like. In the case of the binder that uses water as the solvent, a thickener is preferably used in combination. An amount of the solvent is adjusted such that the paste has the viscosity by which the paste can be readily coated on the current collector.

A coating method of the paste is not particularly limited. A thickness of the electrode layer is usually 50 to 200 µm. When the thickness is excessively large, the electrode sheet may not be housed in a standardized battery vessel. The thickness of the electrode layer can be adjusted by a coating amount of the paste. Further, the thickness of the electrode layer can be modified by pressure forming after the paste is dried. As a pressure forming method, a roll press forming method, a plate press forming method or the like can be mentioned.

The electrode layer using the negative electrode material in one embodiment of the present invention has a volume resistivity of preferably not larger than 0.5 Ωcm, wherein the volume resistivity is determined by a four-probe method during the electrode layer has net been pressed. It is considered that the reason why the negative electrode material in preferable one embodiment of the present invention has the volume resistivity like this is because the particles (A), the graphite particles (B), and the carbon fibers (C), and the carbon nanofibers (D) or the conductive carbon particles which are used if need arises, are appropriately entangled with each other to form a conductive network that is free from large linkle, dispersed uniformly and dense.

### (Lithium Ion Battery)

A lithium ion battery involved in one embodiment of the present invention comprises at least one selected from the group consisting of a nonaqueous electrolytic solution and a nonaqueous polymer electrolyte, a positive electrode sheet, and a negative electrode sheet. For the negative electrode sheet, the electrode sheet comprising the negative electrode material involved in one embodiment of the present invention can be used.

For the positive electrode sheet used in the present invention, a conventional positive electrode sheet that has been used in the lithium ion batteries, specifically, a sheet comprising a positive electrode material can be used. As the positive electrode material, one or two or more kinds of arbitrary ones selected from conventionally well-known materials (materials capable of occluding/releasing lithium ions) as the positive electrode materials in the lithium-base battery can be employed. Among these, a lithium-containing metal oxide capable of occluding/releasing lithium ions is preferable. As the lithium-containing metal oxide, composite oxides containing a lithium element and at least one of element selected from Co, Mg, Cr, Mn, Ni, Fe, Al, Mo, V, W and Ti can be mentioned. Specific examples of the positive electrode material can include LiNiO₂, LiCoO₂, LiMn₂O₄, LiNi_{0.34}Mn_{0.33}Co_{0.33}O₂, LiFePO₄ and the like.

There is no particular limitation on the nonaqueous electrolytic solution and nonaqueous polymer electrolyte used in the lithium ion batteries. For example, mentioned can be an organic electrolytic solution in which a lithium salt such as LiClO₄, LiPF₆, LiAsF₆, LiBF₄, LiSO₃CF₃, CH₃SO₃Li, CF₃SO₃Li or the like is dissolved in a nonaqueous solvent such as ethylene carbonate, diethyl carbonate, dimethyl carbonate, ethyl methyl carbonate, propylene carbonate, butylene carbonate, acetonitrile, propyronitrile, dimethoxyethane, tetrahydrofuran, γ-butyrolactone or the like; a gel-like polymer electrolyte containing polyethylene oxide, polyacrylonitrile, polyvinylidene fluoride, polymethyl methacrylate or the like; and a solid-like polymer electrolyte containing a polymer having an ethylene oxide bond or the like.

Further, a slight amount of a substance that undergoes a decomposition reaction during first charge of the lithium ion battery may be added to the electrolytic solution. As the substance, for example, vinylene carbonate (VC), biphenyl, propane sultone (PS), fluoroethylene carbonate (FEC), ethylene sulfite (ES) or the like can be mentioned. An addition amount thereof is preferably from 0.01 to 30% by mass.

In the lithium ion secondary battery of the present invention, a separator can be placed between the positive electrode sheet and the negative electrode sheet. Examples of the separators can include a non-woven fabric, a cloth, or a microporous film, or combinations thereof or the like, which comprise polyolefin such as polyethylene, polypropylene or the like as a main component.

### EXAMPLES

Examples of the present invention are shown below and the present invention is more specifically described. These examples are only illustrations for explanation and the present invention is not at all limited by these examples.

### Example 1

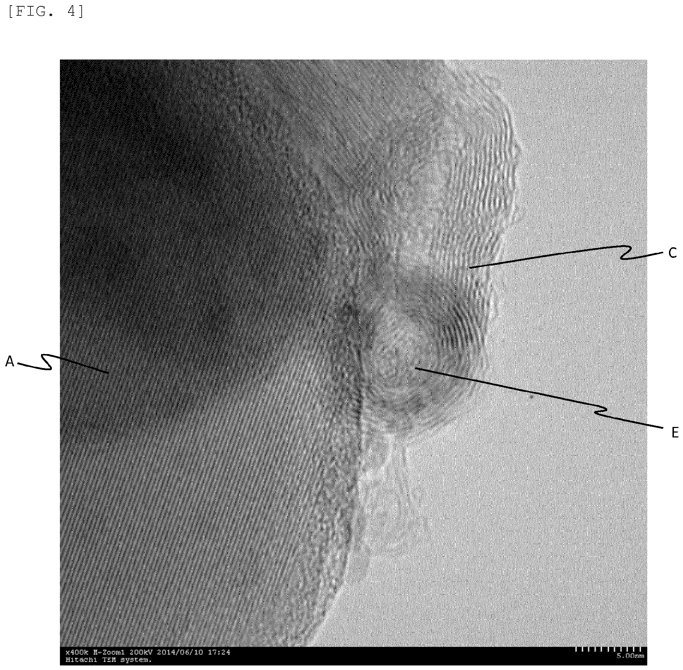

First, 3.1 g of Si particles (having a 90% particle diameter in the volume-based cumulative particle size distribution of not larger than 200 nm) and 1.3 g of carbon nanotubes (VGCF-XA (registered trademark) manufactured by SHOWA DENKO K.K., not less than 95% fibers to all fibers have a fiber diameter of not smaller than 2 nm and not larger than 40 nm and an aspect ratio of not smaller than 10 and not larger than 15, 000) were subjected to a mechanochemical treatment for 5 minutes using a pulverizer (NOBILTA (registered trademark) manufactured by Hosokawa Micron Corporation. NOB-MINI) at an onset output of 300 W (4.3 W/cm³ per unit volume of a sample) to obtain a mechanochemically treated article (1) comprising the Si particles and the carbon nanotubes. In the treated article, a three-dimensional web structure composed of the carbon nanotubes where the aggregation of the carbon nanotubes was loosened was formed, and the Si particles were fusion-bonded to the carbon nanotubes constituting the structure. In FIG.1 to FIG.4, TEM images that show a fusion-bonded state between the Si particles and the carbon nanotubes are shown. It can be confirmed that the carbon nanotubes were softly and three-dimensionally interlaced to form into a network. It is also confirmed that the Si particles were fusion-bonded to the carbon nanotubes. As shown in, for example, FIG. 4, the fusion-bonding between the Si particles and the carbon nanotubes can be confirmed from an image having no crystal lattice, that is the amorphous image, found in a region between a crystal lattice image derived from the Si particles and a crystal lattice image derived from the carbon nanotubes. By the fusion-bonding, firm conductive paths are formed between the Si particles and the carbon nanotubes.

Next, 1.3 g of the mechanochemically treated article (1) and 7.8 g of the graphite particles (SCMG (registered trademark), manufactured by SHOWA DENKO K.K., a median value in the number-based distribution of aspect ratios of the primary particles is 1.56, a 50% particle diameter (Dᵥ₅₀) in the volume-based cumulative particle size distribution is not smaller than 2 µm and not larger than 40 µm) were subjected to mechanochemical treatment for 5 minutes using the pulverizer (NOBILTA (registered trademark), manufactured by HOSOKAWA MICRON CORPORATION. NOB-MINI) at an onset output of 300 W (8.6 W/cm³ per unit volume of a sample) to obtain a negative electrode material A. In the negative electrode material A, the three-dimensional web structure was formed of the carbon nanotubes, the Si particles were enclosed in the structures, the Si particles were fusion-bonded to the carbon fibers that constitute the structure, and the structure was fusion-bonded to at least a part of a surface of the graphite particle. The graphite particle was surrounded by the structures.

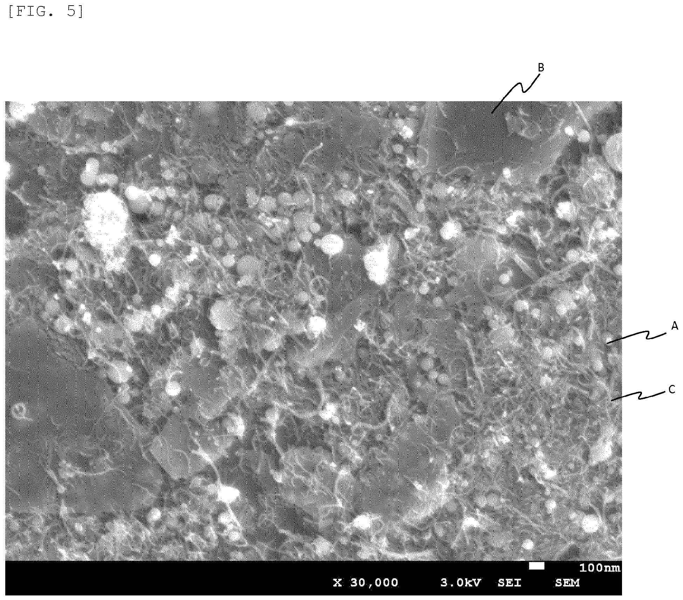

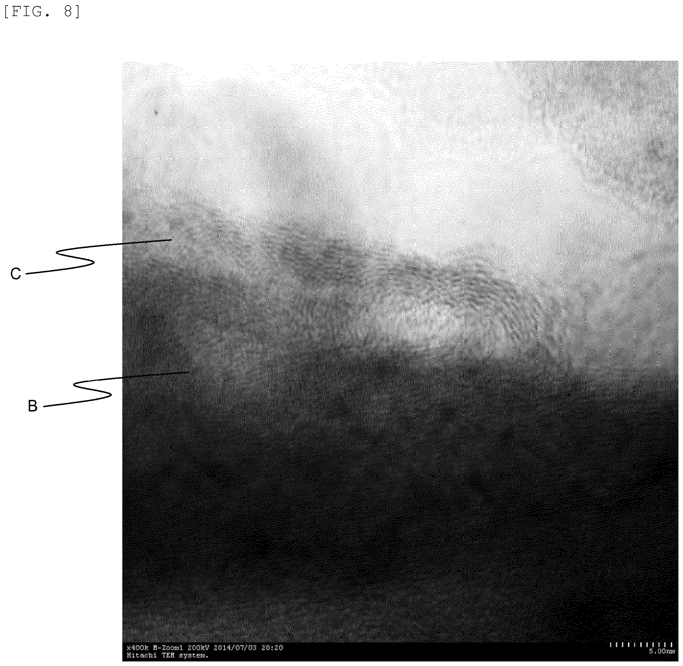

FIG. 5 to FIG. 7 and FIG. 8 respectively show SEM images and a TEM image of the negative electrode material A. It is confirmed that the three-dimensional web structures surround the carbon particles. Further, it is confirmed that the carbon nanotubes that constitute the structure are fusion-bonded to the graphite particle. As shown in, for example, FIG.8, the fusion-bonding between the graphite particles and the carbon nanotubes can be confirmed from an image having no crystal lattice, that is an amorphous image, found in a region between a crystal lattice image derived from the graphite particles and a crystal lattice image derived from the carbon nanotubes. It is considered that due to the fusion-bonding, firm conductive paths are formed between the graphite particles and the carbon nanotubes.

To 1.552 g of the negative electrode material A, 0.1 g of ethylene-vinyl acetate-acrylic acid copolymer aqueous emulsion ("Polysol" (registered trademark), produced by SHOWA DENKO K.K.), and 1.6 g of carboxymethyl cellulose (CMC, article No. 1380, produced by Daicel Chemical Industries, Ltd.), and 1.6 g of purified water were added to prepare a slurry. The slurry was coated on a copper foil, and a solvent was removed by drying at 50 °C under normal pressure to obtain an electrode sheet.

The electrode sheet was punched to obtain a negative electrode with a size of 20 mm × 20 mm. A nickel lead was soldered to the electrode.

The following operations were performed in a glove box maintained in a dry argon gas atmosphere having a dew point of not higher than -80 °C.

A polypropylene plate (40 mm × 40 mm), a working electrode (20 mm × 20 mm, in a battery characteristics evaluation cell of Example, since the negative electrode of the present invention has a potential higher than a potential of a lithium counter electrode and works as a positive electrode in a narrow sense, the negative electrode is called as a working electrode.), a separator (40 mm × 35 mm), a Li foil for the counter electrode (25 mm × 30 mm), and a polypropylene plate (40 mm × 40 mm) were stacked sequentially in this order. This was sandwiched between a folded sheet obtained by folding a sheet of a laminate packaging material (140 mm × 100 mm) so as to be 70 mm × 100 mm and one of short sides (70 mm) of the folded sheet was heat-sealed.

A Li foil for a reference electrode (10 mm × 30 mm) was inserted, having its length along the insertion direction, into the folded sheet from a long side (100 mm) so as to bring into contact with a region that does not contact with the working electrode on a surface on a working electrode side of the separator. The Li foil for the reference electrode and the working electrode are in a positional relationship where they do not come into contact. After that, the long side (100 mm) of the folded sheet was heat-sealed.

From a short side (70 mm) where the folded sheet had not been sealed, 500 µL of an electrolytic solution (electrolyte: 1M LiPF₆, solvent: EC/FEC/EMC/DEC = 2/1/5/2 (volume ratio); manufactured by Kishida Chemical Co., Ltd.) was injected, the short side that had not been sealed of the folded sheet was heat-sealed while vacuuming, thus a cell for evaluation was prepared.

### <Aging>

The cell for evaluation was subjected to an aging treatment under the following charge and discharge condition.

First, a constant current discharge was performed from a rest potential to 10 mV at 300 µA/g. Next, a constant current charge was performed at 300 µA/g, followed by cutting-off at 10 V.

### <Cycle Test>

To an aged cell for evaluation, a constant current discharge was performed from a rest potential to 10 mV at 6.0 mA/g, then, a constant voltage discharge was performed at 10 mV and cut off at 30 mA/g. After that, a constant current charge was performed at 6.0 mA/g and cut off at 1.0 V. This charge and discharge cycle was repeated 100 times.

A charge capacity and a discharge capacity at the first cycle (initial charge capacity and initial discharge capacity), a ratio of the charge capacity at the 100th cycle to the initial charge capacity (capacity retention ratio), and an average value of the Coulomb efficiency between the 90th cycle and 100th cycle are shown in Table 1.

### Example 2

First, 5.0 g of Si particles (having a 90% particle diameter in the volume-based cumulative particle size distribution of not larger than 200 nm) and 0.6 g of carbon nanotubes (VGCF-XA (registered trademark) manufactured by SHOWA DENKO K.K.) were subjected to a mechanochemical treatment for 5 minutes using the pulverizer (NOBILTA (registered trademark) manufactured by HOSOKAWA MICRON CORPORATION. NOB-MINI) to obtain a mechanochemically treated article (2) comprising the Si particles and the carbon nanotubes. In the treated article (2), a three-dimensional web structure composed of the carbon nanotubes where the aggregation of carbon nanotubes was loosened was formed, and the Si particles were fusion-bonded to the carbon nanotubes that constitute the structure.

Next, 1.8 g of the treated article (2) and 13.5 g of the graphite particles (SCMG (registered trademark), manufactured by SHOWA DENKO K.K.) were subjected to a mechanochemical treatment for 5 minutes using the pulverizer (NOBILTA (registered trademark), manufactured by HOSOKAWA MICRON CORPORATION. NOB-MINI) to obtain a negative electrode material B. In the negative electrode material B, the three-dimensional web structure was formed of the carbon nanotubes, the Si particles were enclosed by the structures, the Si particles were fusion-bonded to the carbon fibers that constitute the structure, and the structure was fusion-bonded to at least a part of a surface of the graphite particle. The graphite particle was surrounded by the structures.

A cell for evaluation was prepared in the same manner as that of Example 1 except that the negative electrode material B was used, followed by performing the aging and cycle test.

The charge capacity and the discharge capacity at the first cycle (initial charge capacity and initial discharge capacity), the ratio of the charge capacity at the 100th cycle to the initial charge capacity (capacity retention ratio), and the average value of the Coulomb efficiency between the 90th cycle and 100th cycle are shown in Table 1.

### Example 3

First, 3.1 g of Si particles (having a 90% particle diameter in the volume-based cumulative particle size distribution of 800 nm) and 1.3 g of carbon nanotubes (VGCF-XA (registered trademark) manufactured by SHOWA DENKO K.K.) were subjected to a mechanochemical treatment for 5 minutes using the pulverizer (NOBILTA (registered trademark) manufactured by HOSOKAWA MICRON CORPORATION. NOB-MINI) at an onset output of 300 W (4.3 W/cm³ per unit volume of a sample) to obtain a mechanochemically treated article (3) comprising the Si particles and the carbon nanotubes. In the treated article (3), the three-dimensional web structure composed of the carbon nanotubes where the aggregation of the carbon nanotubes was loosened was formed, and the Si particles were fusion-bonded to the carbon nanotubes that constitute the structure.

Next, 1.3 g of the mechanochemically treated article (3) and 7.8 g of the graphite particles (SCMG (registered trademark, manufactured by SHOWA DENKO K.K.) were subjected to a mechanochemical treatment for 5 minutes using the pulverizer (NOBILTA (registered trademark), manufactured by HOSOKAWA MICRON CORPORATION. NOB-MINI) at an onset output of 300 W (8.6 W/cm³ per unit volume of a sample) to obtain a negative electrode material C. In the negative electrode material C, the three-dimensional web structure was formed of the carbon nanotubes, the Si particles were enclosed by the structures, the Si particles were fusion-bonded to the carbon fibers that constitute the structure, and the structure was fusion-bonded to at least a part of the surface of the graphite particle. The graphite particle was surrounded by the structures.

A cell for evaluation was prepared in the same manner as that of Example 1 except that the negative electrode material C was used, followed by performing the aging and the cycle test.

The charge capacity and the discharge capacity at the first cycle (initial charge capacity and initial discharge capacity), the ratio of the charge capacity at the 100th cycle to the initial charge capacity (capacity retention ratio), and the average value of the Coulomb efficiency between the 90th cycle and 100th cycle are shown in Table 1.

### Comparative Example 1

First, 10 parts by mass of Si particles (having a 90% particle diameter in the volume-based cumulative particle size distribution of not larger than 200 nm) and 84 parts by mass of the graphite particles (SCMG (registered trademark) manufactured by SHOWA DENKO K.K.) were subjected to a mechanochemical treatment for 5 minutes using the pulverizer (NOBILTA (registered trademark) manufactured by HOSOKAWA MICRON CORPORATION. NOB-MINI) to obtain a negative electrode material D.

To 1.552 g of the negative electrode material D, 0.041 g of styrene butadiene rubber (SBR), 0.041 g of carboxymethyl cellulose (CMC article No. 1380, manufactured by Daicel Chemical Industries, Ltd.), 0.049 g of carbon black (manufactured by TIMICAL Co.), and 0.033 g of carbon nanotubes (VGCF-XA (registered trademark) manufactured by SHOWA DENKO K.K.) were added, thus a slurry was prepared. A cell for evaluation was prepared in the same manner as that of Example 1 except that the relevant slurry was used, and the aging and cycle test were performed.

The charge capacity and the discharge capacity at the first cycle (initial charge capacity and initial discharge capacity), the ratio of the charge capacity at the 100th cycle to the initial charge capacity (capacity retention ratio), and the average value of the Coulomb efficiency between the 90th cycle and 100th cycle are shown in Table 1.

According to a SEM observation image of electrode cross-section, a situation where an aggregation bundle composed of the carbon nanotubes (a state where the carbon nanotubes form into a solid aggregate) are found in the vicinity of the Si particles and the graphite particle.

### Comparative Example 2

A negative electrode material E was prepared in the same manner as that of Example 1 except that the graphite particles (SCMG (registered trademark) manufactured by SHOWA DENKO K.K.) were replaced with graphite particles (artificial graphite) having a median value in the number-based distribution of the aspect ratios of primary particles of 1.1. The negative electrode material E had the coverage factor of the three-dimensional web structure to the graphite particles (B) of less than 50% as shown in a SEM observation image of FIG. 10.

A cell for evaluation was prepared in the same manner as that of Example 1 except that the negative electrode material E was used, followed by performing the aging and the cycle test.

The charge capacity and the discharge capacity at the first cycle (initial charge capacity and initial discharge capacity), the ratio of the charge capacity at the 100th cycle to the initial charge capacity (capacity retention rate), and the average value of the Coulomb efficiency between the 90th cycle and 100th cycle are shown in Table 1.

It is found that when the three-dimensional web structure composed of the Si and carbon nanotubes do not cover not smaller than 50% of a total length of an outer periphery of the graphite particle, the capacity retention ratio is largely degraded.

### Comparative Example 3

A negative electrode material F was prepared in the same manner as that of Example 1 except that the carbon nanotubes were replaced by Ketjen Black (KB: provided from Lion Corporation). In the negative electrode material F, the Ketjen Black was fusion-bonded to the graphite particle.

A cell for evaluation was prepared in the same manner as that of Example 1 except that the negative electrode material F was used, followed by performing the aging and the cycle test.

The charge capacity and the discharge capacity at the first cycle (initial charge capacity and initial discharge capacity), the ratio of the charge capacity at the 100th cycle to the initial charge capacity (capacity retention ratio), and the average value of the Coulomb efficiency between the 90th cycle to 100th cycle are shown in Table 1.
[Table 1]

**Table 1**

| | Initial Discharge Capacity [mAh/g] | Initial Charge Capacity [mAh/g] | Capacity retention ratio at the 100th cycle [%] | Average value of Coulomb efficiency between 90th and 100th cycles [%] |
|---|---|---|---|---|
| Ex. 1 | 603 | 576 | 86 | 99.8 |
| Ex. 2 | 632 | 610 | 75 | 99.8 |
| Ex. 3 | 541 | 504 | 88 | 99.7 |
| Comp.Ex.1 | 483 | 425 | 63 | 99.1 |
| Comp.Ex.2 | 560 | 522 | 68 | 99.2 |
| Comp.Ex.3 | 510 | 444 | 78 | 98.8 |

### Example 4

A negative electrode material G was prepared in the same manner as that of Example 1 except that the Si particles were replaced by Sn particles (a 90% particle diameter in the volume-based cumulative particle size distribution is not larger than 200 nm). In the negative electrode material G, the three-dimensional web structure was formed of the carbon nanotubes, the Sn particle was enclosed by the structures, the Sn particles were fusion-bonded to the carbon fibers that constitute the structure, and the structure was fusion-bonded to at least a part of the surface of the graphite particle. The graphite particle was surrounded by the structures.

A cell for evaluation was prepared in the same manner as that of Example 1 except that the negative electrode material G was used, followed by performing the aging and the cycle test.

The charge capacity and the discharge capacity at the first cycle (initial charge capacity and initial discharge capacity), the ratio of the charge capacity at the 100th cycle to the initial charge capacity (capacity retention ratio), and the average value of the Coulomb efficiency between the 90th and 100th cycle are shown in Table 2.

### Example 5

A negative electrode material G was prepared in the same manner as that of Example 1 except that the Si particles were replaced by Sn particles (a 90% particle diameter in the volume-based cumulative particle size distribution is 800 nm). In the negative electrode material H, the three-dimensional web structure was formed of the carbon nanotubes, the Sn particle was enclosed by the structures, the Sn particles were fusion-bonded to the carbon fibers that constitute the structure, and the structure was fusion-bonded to at least a part of a surface of the graphite particle. The graphite particles were surrounded by the structures.

A cell for evaluation was prepared in the same manner as that of Example 1 except that the negative electrode material H was used, followed by performing the aging and the cycle test.

The charge capacity and the discharge capacity at the first cycle (initial charge capacity and initial discharge capacity), the ratio of the charge capacity at the 100th cycle to the initial charge capacity (capacity retention ratio), and the average value of the Coulomb efficiency between the 90th cycle and 100th cycle are shown in Table 2.

### Comparative Example 4

A negative electrode material I, a slurry, and a cell for evaluation were prepared in the same manner as that of Comparative Example 1 except that the Si particles were replaced by Sn particles (a 90% particle diameter in the volume-based cumulative particle size distribution is not larger than 200 nm), followed by performing the aging and cycle test.

The charge capacity and the discharge capacity at the first cycle (initial charge capacity and initial discharge capacity), the ratio of the charge capacity at the 100th cycle to the initial charge capacity (capacity retention ratio), and the average value of the Coulomb efficiency between the 90th cycle and 100th cycle are shown in Table 2.

### Comparative Example 5

A negative electrode material J was prepared in the same manner as that of Example 4 except that the graphite particles (SCMG (registered trademark): manufactured by SHOWA DENKO K.K.) were replaced by graphite particles (artificial graphite) having a median value in the number-based distribution of aspect ratios of the primary particles of 1.1. The negative electrode material J had the coverage ratio of the three-dimensional web structure to the graphite particles (B) of less than 50%.

A cell for evaluation was prepared in the same manner as that of Example 1 except that the negative electrode material J was used, followed by performing the aging and the cycle test.

The charge capacity and the discharge capacity at the first cycle (initial charge capacity and initial discharge capacity), the ratio of the charge capacity at the 100th cycle to the initial charge capacity (capacity retention ratio), and the average value of the Coulomb efficiency between the 90th cycle and 100th cycle are shown in Table 2.
[Table 2]

**Table 2**

| | Initial Discharge Capacity [mAh/g] | Initial Charge Capacity [mAh/g] | Capacity retention ratio at the 100th cycle [%] | Average value of Coulomb efficiency between 90th and 100th cycles [%] |
|---|---|---|---|---|
| Ex.4 | 387 | 368 | 85 | 99.9 |
| Ex.5 | 347 | 322 | 87 | 99.1 |
| Comp.Ex.4 | 361 | 329 | 61 | 99.3 |
| Comp.Ex.5 | 330 | 308 | 67 | 98.6 |

### EXPLANATION OF SYMBOLS

- A:: Si particles
- B:: Graphite particles
- C:: Carbon nanotube
- E:: Tip of carbon nanotube

## Claims

1. A negative electrode material for lithium ion secondary battery, the negative electrode material comprising:
particles (A) comprising an element, which is capable of occluding/releasing lithium ions, other than a carbon element;
graphite particles (B) capable of occluding/releasing lithium ions and having a median value of not smaller than 1.4 and not larger than 3.0 in a number-based distribution of aspect ratios of primary particles; and carbon fibers (C);
wherein a three dimensional web structure is formed of one or more carbon fibers (C), the particles (A) are fusion-bonded to the structure, and the structure is fusion-bonded to at least a part of a surface of the graphite particle (B).

2. The negative electrode material for lithium ion secondary battery according to claim 1, wherein the particles (A) have a 90% particle size of not larger than 200 nm in a volume-based cumulative particle size distribution of primary particles.

3. The negative electrode material for lithium ion secondary battery according to claim 1 or 2, wherein the graphite particles (B) are artificial graphite obtained by heat treating petroleum cokes and/or coal cokes at not lower than 2500 °C.

4. The negative electrode material for lithium ion secondary battery according to any one of claims 1 to 3, wherein the carbon fibers (C) contain carbon nanotubes having an average fiber diameter of not smaller than 2 nm and not larger than 40 nm and an aspect ratio of not smaller than 10 and not larger than 15000.

5. The negative electrode material for lithium ion secondary battery according to any one of claims 1 to 4, wherein an amount of the graphite particles (B) is not less than 86 parts by mass and not more than 89 parts by mass to 10 parts by mass of the particles (A).

6. The negative electrode material for lithium ion secondary battery according to any one of claims 1 to 5, wherein an amount of the carbon fibers (C) is not smaller than 1 part by mass and not larger than 4 parts by mass to 10 parts by mass of the particles (A).

7. The negative electrode material for lithium ion secondary battery according to any one of claims 1 to 6, wherein the particles (A) comprise at least one element selected from the group consisting of Si, Sn, Ge, Al and In.

8. A lithium ion secondary battery comprising the negative electrode material for lithium ion secondary battery according to any one of claims 1 to 7.

9. A method for manufacturing the negative electrode material for lithium ion secondary battery according to any one of claims 1 to 7, the method comprising :
subjecting the particles (A) and the carbon fibers (C) to a mechanochemical treatment to obtain a product (1) comprising the particles (A) and the carbon fibers (C), the particles (A) comprising an element capable of occluding/releasing lithium ions other than a carbon element;
mixing graphite particles (B) with the product (1) at a mass larger than a mass of the product (1); and
subjecting the product (1) and the graphite particles (B) to a mechanochemical treatment.
